# EUROPEAN PATENT APPLICATION

(11) **EP 0 895 396 A2**
(43) Date of publication of application: **03.02.1999**
(21) Application number: 98202178.4
(22) Date of filing: 25.06.1998
(51) Int. Cl.: H04M 3/50, G10L 9/00

(54) **Spoken dialogue system for information access**

(30) Priority: 03.07.1997 US 51646 P
(71) Applicant: TEXAS INSTRUMENTS INCORPORATED, Dallas, TX 75265 (US)
(72) Inventor: Agarwal, Rajeev, Fort Worth, TX (US)
(74) Representative: Holt, Michael

(57) **Abstract**

A spoken dialogue system for information access is provided wherein the dialogue manager 20 includes an upper layer of domain independent states of initial state 41, quit state 42, metaquery state 43, out of sounds state 44, status quo state 45, ambiguous state 46, inconsistent state 47, and correction state 48, which states are passed before a database query 61. The upper layer includes the success state 50, database conflict state 51, few match state 53, and many matches state 54 processed after a database query 61. The lower level states such as from success state 50, database conflict state 51 and many matches states are domain dependent states and are dependent on the particular application.

## Description

### TECHNICAL FIELD OF THE INVENTION

The present invention relates to spoken dialogue system for information access.

### BACKGROUND OF THE INVENTION

With the rapid explosion of the World Wide Web, it is becoming increasingly possible to easily acquire a wide variety of information such as flight schedules, yellow pages, used car prices, current stock prices, entertainment event schedules, account balances, etc.

One may wish to get the arrival/departure information for a given flight, verify if a particular book is available at a library, find the stock price for any fund, access yellow page information on-line, check/maintain voice mail remotely, get schedules for entertainment events, perform remote banking transactions, get used car prices, the list goes on and on. Such tasks can be classified as information access (IA) tasks, where the primary objective is to get some piece of information from a certain place by providing constraints for the search. Some of these tasks may also involve an "action" that may change the state of the underlying database, (e.g., making a reservation for an event), making transactions on an account, etc. It would be very helpful to develop Spoken Dialogue (SD) interfaces for such IA applications, and several such attempts are already being made (Seneff, et al. "Multimodal discourse modeling in a multi-user multi-domain environment, Proceedings of International Symposium on Spoken Dialogue, Philadelphia, PA, October, 1996. pages 105-108, Acoustical Society of Japan.; Sadek, et al., "Effective human-computer cooperative spoken dialogue: The AGS demonstrator" Proceedings of International Symposium on Spoken Dialogue, Philadelphia, PA, October, 1996, pages 169-172, Acoustical Society of Japan; Abella, A., et al. "Development Principles for dialogue-based interfaces." Dialogue Processing in Spoken Language Systems Workshop Notes, Budapest, Hungary, August, 1996, pages 1-7.; Fraser, N, et al. "Spoken dialogue systems: A European perspective." Proceedings of International Symposium on Spoken Dialogue Philadelphia, PA, October 1996, Pages 25-36, Acoustical Society of Japan.; Lame, L. F., et al., "Field trials of a telephone service for rail travel information., Proceedings of IEEE Third Workshop on Interactive Voice Technology Applications, IEEE Communication Society 1996, pages 111-116.; Kellner, A., et al. "A Voice controlled automatic telephone switchboard and directory information system," Proceedings of the IEEE Third Workshop on Interactive Voice Technology for Telecommunications Applications, IEEE Communications Society 1996, pages 117-120.; Niedermair, G. T, "A flexible call-server architecture for multi-media and speech dialog systems," Proceedings of the IEEE Third Workshop on Interactive Voice Technology for Telecommunications Applications, IEEE Communication Society, 1996, pages 29-32.; Barnett, J., et al. "Architectural issues in spoken natural language dialog systems," Dialogue Processing in Spoken Language Systems Workshop Notes, Budapest, Hungary, August 1996, pages 13-20.; and Gorin, A. L., et al., "How may I help you," Proceedings of the IEEE Third Workshop on Interactive Voice Technology for Telecommunications Applications, IEEE Communications Society, 1996, pages 57-60.)

It is highly desirable to provide an improved spoken dialogue system which is accurate and meets other important design objectives such as portability from one application to another, usability of the system, robustness of the system to help the user to acquire the desired information and extensibility of the system so that additional queries within a given system can be added easily.

### SUMMARY OF THE INVENTION

In accordance with one embodiment of the present invention, a two-layered dialogue architecture for spoken dialogue systems is presented where the upper layer is domain-independent and the lower layer is domain-specific.

### DESCRIPTION OF THE DRAWINGS

The present invention will now be further described, by way of example, with reference to the accompanying drawings in which:-
Fig. 1 is a block diagram of the system according to a preferred embodiment of the present invention;
Fig. 2 illustrates states in the two-layered Dialogue Management Architecture; and
Fig. 3 is a flowchart describing the states in the upper layer of the dialogue manager of Fig. 1.

### DESCRIPTION OF PREFERRED EMBODIMENT

In this application, we differentiate between IA tasks and the more complicated problem solving tasks where multiple sub-problems are concurrently active, each with different constraints on them and the final solution consists of identifying and meeting the user's goals while satisfying these multiple constraints. Examples of such applications include a system that offers investment advice to a user based on personal preferences and the existing market conditions, or an ATIS-like application that assists the user in travel planning including flight reservations, car rental, hotel accommodations, etc.

In addition to the general requirement of accuracy, there are four other important design objectives for spoken dialogue (SD) systems:
- Portability of an SD system refers to the ability of the system to be moved from one application/domain to another.
- Usability of an SD system refers to the ease with which a user can use the system and the naturalness that it provides.
- Robustness of an SD system refers to the ability of the system to help the user acquire the desired information even in the presence of user and system errors.
- Extensibility of an SD system implies that additional queries within a given application can be added to the system without much trouble.

The purpose of this system is to provide an SD system, in particular the dialogue manager, that has these objectives in mind. Since these design objectives are often conflicting in nature, one has to strike a balance between them. In a manner of speaking, one could say that the objective is to create a PURE (Portable, Usable, Robust, Extensible) system. It is our belief that it is possible to develop an "almost" PURE system for IA tasks.

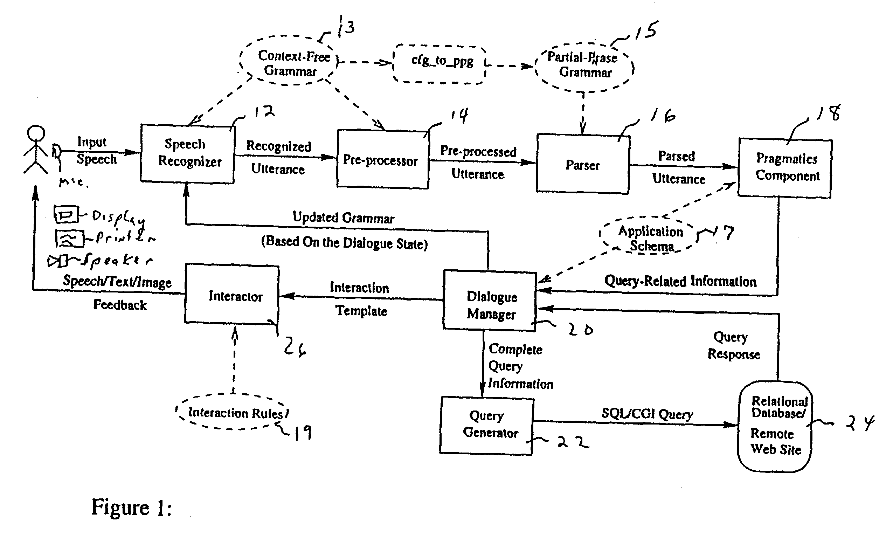

The overall SD system is responsible for taking user utterances as input, processing them in a given context in an attempt to understand the user's query, and satisfying his/her request. The user does not need to know anything about the structure of the database or the architecture of the system. In case the user's utterance has missing, ambiguous, inconsistent, or erroneous information, the system engages the user in a dialogue to resolve these. The system is designed to be mixed-initiative, (i.e., either the user or the system can initiate a dialogue or sub-dialogue at any time). The dialogue ends when the user decides to quit the system. The system can be used for querying a relational database using Structured Query language (SQL) or invoking a CGI script on the web (CGI stands for Common Gateway Interface). It is a tool that assists web programmers in creating interactive, user-driven applications. Several web sites permit database queries where the user types in the search constraints on an HTML FORM and the server submits this form to the CGI script which generates a response after searching a local database. Note that here we refer to such database searches and not to the string searches as offered by Lycos, WebCrawler, Excite, etc. A brief overview of the different components is presented in Fig. 1.

The user speaks and the speech is picked up by a microphone 11 and applied to a speech recognizer 12. Recognizer 12 is responsible for recognizing the user utterance and producing a recognition string. Separate context-free grammars 13 (stored in a database) are written for each state of the dialogue and this is used to recognize the utterances with the DAGGER speech recognition system described in Hemphill, et al., "Surfing the web by voice," Proceedings of ACM Multi-media, San Francisco, CA November 7-9, 1995, pages 215-222. Also see U. S. Patent No. 5,774,628, filed 04/10/95, of Hemphill entitled, "Speaker-Independent Dynamic Vocabulary And Grammar In Speech Recognition" and is incorporated herein by reference. An important feature of this recognizer 12 is that based on the dialogue state, certain grammars may be switched into or out of the dynamic vocabulary, thereby leading to better speech recognition accuracy. We only use the grammar switching feature of DAGGER, but it offers the ability to load completely new grammars dynamically if such a need arises.

The output from the recognizer 12 is applied to preprocessor 14. This component is responsible for identifying domain-independent (e.g., time, place name, date) and domain-specific (e.g., airport name, book title) semantic patterns in the input utterance. The preprocessor 14 also uses the grammar 13. The utterance may be, for example, "What time does my American flight reach DFW tonight?" The preprocessor recognizes "DFW" as airport name, "tonight" as a time pattern, and "American" as airline name. The output of the preprocessor 14 s applied to parser 16. Since user utterances could be ungrammatical in nature, a partial parser 16 is implemented to parse the input utterance into its component phrases. This provides added robustness, although lack of a deep structure in the parse sometimes causes the pragmatics component 18 that follows to miss useful information. The parser 16 uses partial parse grammars 15 automatically generated from context free grammars 13. The parsed utterance is applied to the pragmatics component 18. This component 18 is responsible for identifying the values of relevant fields that are specified in the utterance, based on the partial parse of the utterance. It uses an application specific input file called the "application schema" file 17, which describes all the relevant fields in that application and lexico-semantic patterns that indicate their presence. For example, the file could contain fields for arrival city, departure city, departure time, flight number with a series of recognized phrases for each field. It also describes the possible queries that may be made in that application. For example, a flight-number-query or a source-destination query. The output of the pragmatic component is applied to dialogue manager 20. The dialogue manager 20 also using the application schema file 17 evaluates the knowledge extracted by the pragmatics component 18 to determine the current state of the dialogue. The dialogue manager 20 processes this new dialogue state and constructs an "interaction template" that determines what feedback should be provided to the user via an interactor 26. A query generator 22 coupled to the dialogue manager is responsible for generating a database query when there is enough information to query the information database 24. It can generate either a SQL query for a relational database or a CGI script query for querying a web site 24. The interaction template from the dialogue manager 20 is applied to interactor 26. The interactor 26 is responsible for converting the interaction template generated by the dialogue manager 20 into English sentences that can be printed and/or spoken (using a text-to-speech synthesizer system) to the user to provide feedback. It uses a template-to-string rules file 19 that contains rules for all possible types of interactions. In some cases, it may also provide feedback by updating a displayed image.

Existing approaches to designing dialogue managers 20 can be broadly classified into three types: graph-based, frame-based, and plan-based.

Graph-based approaches require the entire dialogue state transition graph for an application to be pre-specified. Several dialogue design toolkits are available to assist developers in this task, such as the SLUrp toolkit (Sutton, S., et al., "Building 10,000 spoken dialogue systems." Proceedings of the Fourth International Conference on Spoken Language Processing, Vol. 2, October 1996, pages 709-712), SpeechWorks toolkit (Applied Language Technologies, 1997 http://www.altech.com/products.htm), or DDL-tool (Baekgaard, A., "Dialogue management in a generic dialogue system," Proceedings of the Eleventh Workshop on Language Technology: Dialogue Management in Natural Language Systems, Enschede, University of Twente, 1996, pages 123-132). It is often cumbersome and sometimes impossible to pre-specify such a dialogue graph. Further, such approaches are not robust as they cannot appropriately handle any unforeseen circumstances.

Plan-based approaches attempt to recognize the intentions of the entities involved in the discourse and interpret future utterances in this light. They are usually based on some underlying discourse model, several of which have been developed over the years (Cohen, P., et al., "Elements of a plan-based theory of speech acts," Cognitive Science, 1979., 3:172-212; Mann, W. C., et al., "Relational propositions in discourse," Technical Report RR-83-115, Information Sciences Institute, Marina del Rey, CA, 1983.; Grosz, B., et al., "Attention, intentions, and structure of discourse," Computational Linguistics, 1986, 12(3):175-204.; and Carberry, S, "Plan Recognition in Natural Language Dialogue," MIT Press, Cambridge, MA, 1990). Although plan-based systems are very useful for problem-solving tasks like the ones described earlier, that degree of sophistication is not needed for IA tasks. For example, of the five types of intentions outlined by Grosz and Sidner (1986), only "intent that some agent believe some fact." and "intent that some agent know some property of an object" are encountered in IA tasks, and they can be easily conflated for such tasks, without any loss of information. Further, although modeling a speaker's intentions and the relations between them is informative about the structure of the discourse, their recognition in an actual system may be non-trivial and prone to errors. Most IA tasks have only one discourse purpose, and that is to get some information from the system. The various discourse segments are all directed at providing the system with relevant constraints for the database query. Therefore, explicit modeling of the discourse purpose or discourse segment purpose is unnecessary.

Frame-based systems typically have a domain/application model to which they map user utterances in an attempt to recognize the nature of the user's query. The constraints of the application drive the analysis of utterances. Such systems usually ignore phenomena like dietetic references, expressions of surprise, discourse segment shifts, etc. For IA tasks, the frame-based approaches are believed the most suitable.

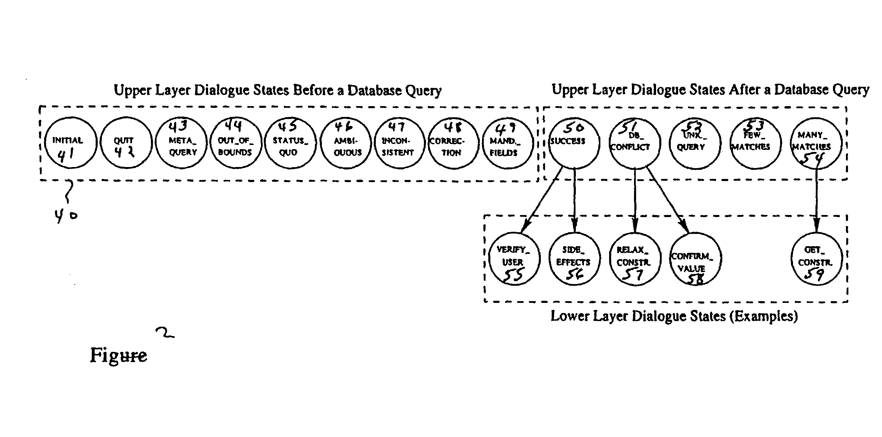

According to the present invention, for IA tasks, the dialogue between the user and the system proceeds in a domain-independent manner at a higher level and can be described by a set of domain-independent states. Some domain-specific interactions are required once the dialogue is in one of these higher level states and these can be described by a different set of states. This view of the structure of the dialogue led us to a two-layered architecture for the dialogue manager 20. The upper layer is completely domain-independent, while the lower layer has dialogue states that constitute domain-specific sub-dialogues. Further, although the different states of the dialogue are pre-specified, the system automatically identifies what state it is in based on the user's utterance, the result of the database query, and knowledge of the previous dialogue state. This general type of system is what Fraser and Dalsgaard (1996) refer to as a self-organizing system. Most plan-based and frame-based systems are self-organizing. The states in the dialogue manager 20 according to one embodiment of the present invention are shown in Fig. 2.

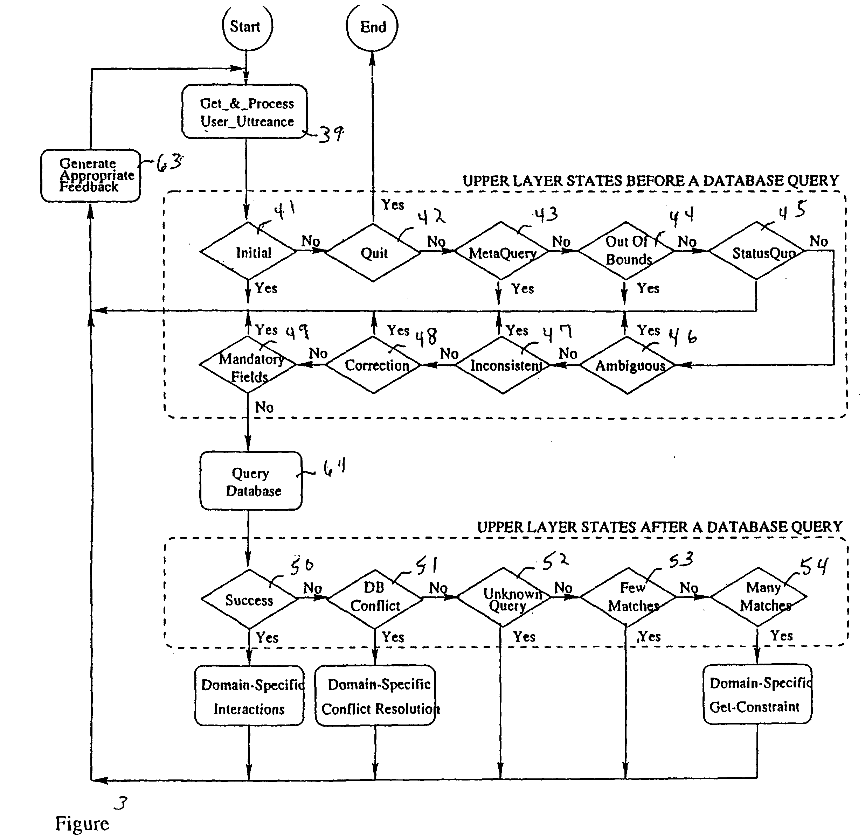

All fourteen states 41-54 presented here at the top level belong to the upper layer of the dialogue. These are domain independent states. The dialogue states 41-49 are before there is a database query. The states 50-54 are after a database query. For some of these upper layer states 50, 51, and 54, references are made to the lower layer dialogue states 55-59 that they may spawn to accomplish domain-specific sub-dialogues. After every user utterance, the dialogue manager 20 checks t:o see if the dialogue is in one of the upper layer dialogue states 41-54. Lower layer dialogue states 55-59 are checked only if the system is already in a sub-dialogue. The upper layer states 41-54 are tried in the order in which they are described below since if the dialogue is in any of the earlier states, there is no point in trying later ones. Fig. 3 is a flowchart of the program for the upper layer in the dialogue manager 20. The first step 39 is to get and process the user's utterance. The existence of one of the first nine states 41-49 listed below may be determined without a database query (Step 61). In each case, appropriate interaction is generated in Step 63. If the dialogue is not in any one of these nine states 41-49, then there is enough information to issue a query to the database at Step 61, and the dialogue may be in one of the last five states 50-54 based on the results of the query. Again, in each case, appropriate feedback interaction is generated at Step 63. The dialogue ends when the QUIT state 42 is reached.
1. INITIAL (State 41): This is the state in which each dialogue starts and reverts to after a query made by the user has been completely processed.
2. QUIT (State 42): If the system detects that the user wants to terminate the current dialogue, then the dialogue enters this state as yes and goes to end.
3. META_QUERY (State 43): The dialogue reaches this state when the user either explicitly asks for help (e.g., "Please help me," "what can I say," etc.) or asks for some meta-level information about the system's capabilities (e.g., "what cities do you know about?"). The help messages in the system are context-sensitive and are based on the current dialogue state.
4. OUT_OF_BOUNDS (State 44): This state is reached when the system realizes that the user either wants to access information that the system is not equipped to handle or access "legitimate" information in ways the system is not designed to handle. For example, if a system is designed to access American Airlines flight information and the user says "what time does Delta flight 472 reach Dallas?," the system enters the OUT_OF_BOUNDS state. An example of an improper legitimate query could be "what time does my plane leave?," if the system expects the word 'flight' but not 'plane'. The objective is not just to quit gracefully, but to allow the user to re-enter the dialogue at some place. In the first case, the system informs the user of the limitations of the system, switches the dialogue to the INITIAL state 41, and permits the user to revert to some query within the bounds of the system. In the second case, it informs the user that the word 'plane' is unknown to the system, and requests him/her to rephrase the query.
5. STATUS_QUO (State 45): This state is reached if the system determines that the most recent utterance by the user provided no additional query-related information to the system. This is an indication that the user was either completely silent, did not know the answer to the system's previous question (may have responded by saying "I don't know" to something the system had asked), explicitly asked the system to repeat the last feedback (may have said "Can you repeat that"), the speech recognizer misrecognized the part of the utterance that was meant to be informational, or the utterance really had no new information. Based on what the user said, an appropriate response is generated.
6. AMBIGUOUS (State 46): This state is reached when one of three types of ambiguities exists in the system. Lexical ambiguity arises if some user term matches two entities within the same semantic class. For example, in a library application, if the user asks for "Dickens" and the database contains two or more authors with that last name, this term is lexically ambiguous. Class ambiguity arises if a term may belong to two or more semantic classes. In the above example, if there is also a book entitled "Dickens" in the database, then class ambiguity exists since it is unknown whether the user meant the 'author' or the 'title'. This can often be resolved based on the surrounding context. Field ambiguity arises when the system has found a term that could refer to more than one database field. For example, in a flight arrival/departure application, if the system prompts the user for either the arrival city or departure city, and the user just says "Newark," the field to which the term belongs is ambiguous.
7. INCONSISTENT (State 47): User or system errors may sometimes lead the dialogue manager to this state where the system's knowledge of the various fields violates some consistency rule. The consistency rules specific to an application are provided in an input file. For example, an error may cause the system to believe that the departure city and the arrival city in a flights arrival/departure application are the same. If that happens, the user is notified of the inconsistency so that the error may be rectified.
8. CORRECTION (State 48): This state is reached when the system realizes that the user is attempting to correct either an error the user may have made or an error made by the recognizer. As a result, the system accepts the corrected value provided by the user (assuming that this new value is correctly recognized) and provides appropriate feedback. For example, in a flight arrival/departure application, the user might say "I said Dallas, not Dulles" to correct a misrecognition by the speech recognizer.
9. MANDATORY_FIELDS (State 49): This state is needed only for applications in which values for certain fields must be known before a query can be issued. This is often true of applications that invoke CGI scripts on the web. For example, the American Airlines web site only permits a query if the user specifies either the flight number, or the arrival and departure city and approximate arrival time, or the arrival and departure city and approximate departure time. This state ensures that values for these mandatory fields are obtained from the user before issuing a CGI query.
10. SUCCESS (State 50): If none of the previous states were found, a query is issued to the system to query the database. If this query results in a successful match, then the dialogue is in this state. After providing appropriate feedback to the user, the system performs a further check to see if any "action" needs to be carried out on the accessed item(s) of information. For example, in a banking application, having checked the balance in a savings account, the user may now wish to transfer money from checking to savings. This state usually spawns a sub-dialogue which may or may not be domain-specific. The lower level dialogue states in this sub-dialogue could be:
   - VERIFY_USER (State 55): which asks for the user's account ID and password,
   - SIDE_EFFECTS (State 56): which informs the user of some side effects of the imposed constraints, e.g. "This transaction will lead to a negative balance in the checking account," or
   - some other domain-specific state depending upon the nature of the action involved.
      Once in this state, the user may start a new query, ask for more information about the matched item, or quit the system.
11. DATABASE_CONFLICT (State 51): A database conflict arises when the constraints specified by the user do not match any item in the database. This could be because of conflicting information from the user or speech recognition errors. Such conflicts must be resolved before proceeding in the dialogue. Conflict resolution may be accomplished by a sub-dialogue in the lower layer. Some of the possible states in the lower layer are:
   - RELAX_CONSTRAINT (State 57): asks the user to relax a certain constraint, e.g., "No Thai restaurant found on Legacy, but there is one on Spring Creek -- is that OK?" (the system needs domain-specific information that Legacy and Spring Creek are close to each other). In some cases, the system also needs to know which constraints are "negotiable".
   - CONFIRM_VALUE (State 58): asks the user to confirm some field values provided by the user. The confirmation is needed to ensure that it was not a system or user error that caused a conflict.
12. UNKNOWN_QUERY (State 52): In most applications, the user may query different types of information. In a yellow pages application, for example, the user may ask about a phone number, an E-mail address, or a postal address. The dialogue manager may need to know what item of information the user is interested in, as this determines the feedback provided to the user. This is especially useful in applications without a display (queries made over the telephone) since it takes time to give more information than is necessary. Note that it is often possible to issue a database query even if this information is not known, and that is why this state belongs to the set of possible states after a query has been made.
13. FEW_MATCHES (State 53): If the database query results in a "few" matches, then the dialogue enters this state. Whenever few matches are found, the most efficient way to consummate the query is to enumerate these matches so that the user can the select the one of interest.
14. MANY_MATCHES (State 54): If none of the previous states are reached, the database query must have resulted in too many matches, (i.e., not enough information was supplied by the user to match only a single or a few database items). This state may spawn a domain-specific sub-dialogue in the lower layer, one of whose states could be:
   - GET_CONSTRAINT (State 59): The objective is to ask the user to specify the least number of constraints that lead to the SUCCESS state. So, whenever possible, this dialogue state identifies what piece of information would be "most informative" at that point in time, and asks the user to specify its value.

While we have attempted to provide an upper layer that covers most IA tasks, the lower layer states given here are just examples of some possible states. Depending upon the application, more lower layer states can be added to improve the usability/robustness of the system. The applicant believes that the two-layered architecture should make the system more portable. The applicant further contends that if one encounters a dialogue state that is not covered by our state set, it can be abstracted to an upper level state which may later be useful in other applications. Abella et al. (1996), cited above, presents a nice question selection methodology. It may be noted that such a methodology is possible only with local relational databases. It cannot be implemented when querying CGI script:s on the web since we do not have access to the underlying database. We currently resort to a domain-dependent GET_CONSTRAINT state.

We have presented a dialogue management architecture that is mixed-initiative, self-organizing, and has a two-layered state set whose upper layer is portable to other applications. The system is designed to generate either SQL queries or CGI script queries, which makes it capable of querying the vast amount of information available on the World Wide Web. Although the generation of CGI queries is driven by the schema-to-database and user-to-database mappings files, some degree of application specific work still needs to be performed. One has to experiment with the web site and study the source pages for the HTML FORMS screens in order to create these mappings files and possibly write additional code to generate the appropriate query. For example, the American Airlines web site provides three different web pages to support queries about flight arrival/departure information. An examination of all three source pages revealed that a hidden field fltAns gets one of three values based on which page invokes the script. A special hack had to be built into the query generator to assign an appropriate value to this field. Generation of proper user feedback requires us to also examine the source page of the result of the query. The main limitation of querying CGI scripts is that if the web site being queried is modified by its creators, slight modifications will have to be made to the query generator to accommodate those changes.

Our initial experience with this system, especially porting it from the flights arrival/departure application to the Map Finder application, has been very encouraging. Map Finder is a simpler task and some of the upper layer states (UNKNOWN_QUERY, FEW_MATCHES, and MANY_MATCHES) never occur in this application. An additional lower layer state called MAP_COMMANDS is implemented under the SUCCESS state to allow the user to scroll the displayed map in any direction using spoken commands.

Although the present invention and its advantages have been described in detail, it should be understood that various changes, substitutions and alterations can be made herein without departing from the spirit and scope of the invention.

## Claims

1. A method for responding to a spoken-query from a user, which method comprising:
receiving the spoken-query as an utterance;
comparing grammar comprised in at least one portion of said received utterance with grammar stored in a look-up table and generating a recognition string when the grammar comprised in said utterance substantially corresponds with grammar stored in said look-up table; identifying domain-dependent and domain-independent semantic patterns in the received utterance;
dividing the received utterance into a plurality of portions each comprising the component phrases of said received utterance;
identifying a value for at least one portion of the received utterance;
evaluating the selected query information and for constructing an interaction template for determining the required response to the spoken-query;
generating a database query indicative of said selected query information; and
responding to said spoken query based upon the result of said database query using said interaction template.

2. Apparatus for responding to a spoken-query from a user, which apparatus comprising:
a receiver 11 for receiving the spoken-query as an utterance;
a speech recogniser 12 for comparing grammar in the received utterance with grammar stored in a look-up table, and for generating a recognition string when the grammar comprised in the utterance substantially corresponds with grammar stored in the look-up table;
a pre-processor 14 for identifying domain-dependent and domain-independent semantic patterns in the received utterance;
a parser 16 for dividing the received utterance into portions;
pragmatic means 18 for selecting query information from the domain-independent and domain-dependent semantic patterns of at least one portion of the received utterance;
a dialogue manager 20 for evaluating the selected query information and for constructing an interaction template for determining the required response to the spoken-query;
a query generator 22 for generating a database query indicative of said selected query information; and
an interactor 26 for responding to said spoken query based upon the result of said database query using said interaction template.

3. In a spoken dialogue system for information access a dialogue manager comprising:
an upper layer of domain independent dialogue states; and
a lower layer of domain dependent states.

4. The system of Claim 3, wherein said upper layer cf domain independent states includes an initial state, a quit state, a metaquery state, an out-of-bounds state, a status-quo state, an ambiguous state, an inconsistent state, a correcticn state, success state, and database conflict state.

5. The system of Claim 3 or Claim 4, wherein said upper layer includes a few matches state and a many matches state.

6. The system of any of Claims 3 to 5, wherein said upper layer includes a mandatory fields state.

7. The system of any of Claims 4 to 6, wherein said upper layer includes an unknown query state.

8. The system of any of Claims 5 to 7, wherein said initial state, quit state, meta query state, out of bounds state, status quo state, ambiguous state, inconsistent state, correction state are performed before a database query.

9. The system of any of Claims 4 to 6, wherein said lower layer dialogue state from success state includes a verify user state.

10. The system of any of Claims 4 to 9, wherein said lower layer state from said success state includes a side effects state.

11. The system of any of Claims 4 to 10, wherein said lower layer state from said database conflict state includes relax constraint state.

12. The system of any of Claims 4 to 10, wherein said lower layer state from said database conflict includes said confirm value state.

13. The system of any of Claims 5 to 12, wherein said lower layer state from said many matches state is a get constraint state.

14. The system of any of Claims 2 to 13, wherein said upper layer initial state, quit state, meta query state, out of bounds state, status quo state, ambiguous state, inconsistent state, correction state are performed before a database query.

15. In a spoken dialogue system for information access a dialogue manager comprising:
domain independent dialogue states; and
some of said domain independent dialogue states being performed before a database query.

16. The system of Claim 15, wherein said dialogue states of initial state, quit state, meta query state, out of bounds state, status quo state, ambiguous state, inconsistent state, correction state are performed before a database query.

17. The system of Claim 16, wherein said dialogue states of success, database conflict are performed after a database query.

18. The system of Claim 17, wherein the database query is before dialogue states of few matches and many matches.

19. A spoken dialogue system for information access for accessing an information database comprising:
a database of context free grammars 13 written for each state of dialogue in the dialogue system;
a speech recognizer 12 coupled to said database of context free grammars and responsive to incoming speech utterances fcr producing a recognition string;
a preprocessor 14 responsive to said speech recogniser 12 and said database of context free grammars for identifying domain-independent and domain-specific patterns in the utterances;
a database of partial phrase grammar 15 derived from said database of context free grammar 13;
a parser 16 coupled to said database of partial phrase grammar 15 and said preprocessor 14 to parse said utterances into component phrases;
a database of application schema 17 that contains description of all relevant fields in the application and lexico-sematic patterns that indicate their presence as well as all possible queries that may be made to the application;
a pragmatics component 18 coupled to said parser 16 and said database of application schema 17 for identifying values of the relevant fields;
a dialogue manager 20 coupled to said pragmatics component 18 and said database of application schema 17 for determining the current state of the dialogue, determining queries to said information data base, receiving replies from said information database and constructing interaction templates that determines what feedback are provided to the user;
said dialogue manager 20 having an upper layer of domain independent dialogue states and a lower layer of domain dependent states;
a query generator 22 coupled to said dialogue manager 20 for generating database queries to said information database;
an interactor 26 responsive to said interaction templates from said dialogue manager 20 for providing feedback to said user.
